# EUROPÄISCHE PATENTSCHRIFT

(11) **EP 2 906 897 B1**
(45) Veröffentlichungstag und Bekanntmachung des Hinweises auf die Patenterteilung: **08.07.2020**
(21) Anmeldenummer: 13774072.6
(22) Anmeldetag: 02.10.2013
(51) Int. Cl.: F28F 27/02

(54) **VERFAHREN ZUM REGELN EINER TEMPERATURVERTEILUNG IN EINEM WÄRMEÜBERTRAGER**
METHOD FOR CONTROLLING A TEMPERATURE DISTRIBUTION IN A HEAT EXCHANGER
PROCÉDÉ POUR RÉGLER UNE DISTRIBUTION DE TEMPÉRATURE DANS UN ÉCHANGEUR DE CHALEUR

(30) Priorität: 09.10.2012 EP 12006983
(43) Veröffentlichungstag der Anmeldung: 19.08.2015
(73) Patentinhaber: Linde GmbH, 82049 Pullach (DE)
(72) Erfinder: FERSTL, Johann, 80995 München (DE); MOLL, Anton, 82399 Raisting (DE); STEINBAUER, Manfred, 82399 Raisting (DE); VON GEMMINGEN, Ulrich, 80797 MÜNCHEN (DE); FLÜGGEN, Rainer, 83673 Bichl (DE)
(74) Vertreter: Meilinger, Claudia Sabine
(86) Internationale Anmeldenummer: PCT/EP2013/002976
(87) Internationale Veröffentlichungsnummer: WO 2014/056588

(56) Entgegenhaltungen:
- EP-A2- 2 511 642
- DE-A1- 2 835 334
- DE-A1-102007 021 564
- DE-A1-102007 021 565
- US-A1- 2010 012 310

## Beschreibung

Die Erfindung betrifft ein Verfahren zum Regeln einer Temperaturverteilung in einem gewickelten Wärmeübertrager.

Derartige gewickelte Wärmeübertrager sind aus dem Stand der Technik bekannt und dienen zum indirekten Wärmetausch zwischen zumindest zwei fluiden Medien.

Dabei sind bei einem gewickelten Wärmeübertrager eine Mehrzahl an Rohren, die ein Rohrbündel bilden, helikal um ein Kernrohr gewickelt, wobei jenes Rohrbündel von einem drucktragenden Mantel umschlossen ist, der einen das Rohrbündel umgebenden Mantelraum zur Aufnahme des einen Mediums definiert, wobei das andere Medium in dem besagten Rohrbündel geführt wird, so dass die beiden Medien in den besagten direkten Wärmeaustausch treten können. Das Kernrohr erstreckt sich dabei insbesondere entlang einer Längsachse, die - bezogen auf einen bestimmungsgemäß angeordneten Zustands des Wärmeübertragers bzw. des Mantels - mit der Vertikalen zusammenfällt. Ein derartig gewickelter Wärmeübertrager ist zum Beispiel aus der WO 2007/014 617 bzw. WO 2007/009 640 bekannt.

Es ist ein Anliegen, diese energieoptimiert betreiben zu können. So möchte man zum Beispiel bei einem gewickelten Wärmeübertrager im Mantelraum eine möglichst gleichmäßige Verteilung der flüssigen Phase bzw. des Mediums auf das besagte Rohrbündel erreichen, um den Wärmeübertrager möglichst effizient betreiben zu können.

Weiterhin beschreibt die DE 10 2007 021 564 A1 ein Verfahren zur Temperaturmessung in Anlagenteilen der petrochemischen Industrie oder Anlagen zur Lufterzeugung, wobei optische Signale mindestens eines, im Inneren der Anlagenteile befindlichen, Lichtwellenleiters ausgewertet werden. Weiterhin beschreibt die DE 10 2007 021 565 A1 die Temperaturmessung mittels Lichtleitern. Die EP 2511642 A2 beschreibt ebenfalls die Verwendung von Lichtwellenleitern zur Temperaturmessung.

Entsprechend liegt der vorliegenden Erfindung das Problem zu Grunde, ein Verfahren zur Temperaturregelung in einem gewickelten Wärmeübertrager anzugeben, das einen energieoptimierten Betrieb ermöglicht.

Dieses Problem wird durch ein Verfahren zum Regeln einer Temperaturverteilung in einem Wärmeübertrager mit den Merkmalen des Anspruchs 1 gelöst.

Danach wird bei dem erfindungsgemäßen Verfahren mittels zumindest eines in dem Wärmeübertrager angeordneten Lichtwellenleiters, insbesondere in Form einer Glasfaser oder einer sonstigen optischen Faser, eine Isttemperaturverteilung im Wärme-übertrager gemessen, wobei Licht in den mindestens einen Lichtwellenleiter eingestrahlt wird und in dem mindestens einen Lichtwellenleiter gestreutes Licht zur Ermittlung der Isttemperaturverteilung ausgewertet wird, und wobei zumindest ein im Wärmeübertrager geführter Strom eines fluiden Mediums so geregelt wird, dass die Isttemperaturverteilung einer vordefinierten Solltemperaturverteilung angenähert wird. Erfindungsgemäß ist dabei vorgesehen, dass der Wärmeübertrager ein Rohrbündel mit einer Vielzahl an Rohren aufweist, die in einem Mantelraum des Wärmeübertragers angeordnet sind, wobei die Isttemperaturverteilung mittels zumindest eines Lichtwellenleiters gemessen wird, der im Innenraum eines Rohres des Rohrbündels angeordnet ist und/oder mittels zumindest eines Lichtwellenleiters, der auf einer Außenseite eines Rohres des Rohrbündels im Mantelraum angeordnet ist, und wobei der Wärmeübertrager als ein gewickelter Wärmeübertrager ausgebildet ist, und wobei
- die Rohre eine Mehrzahl an separat mit jenem Medium beschickbare Sektionen des Rohrbündels bilden, wobei die einzelnen Sektionen jeweils so mit jenem Medium beschickt werden, dass die Isttemperaturverteilung der Solltemperaturverteilung angenähert wird,
   oder
- ein Strom eines flüssigen Mediums so im Mantelraum auf das Rohrbündel verteilt wird, dass die Isttemperaturverteilung der Solltemperaturverteilung angenähert wird, wobei das flüssige Medium in radialer Richtung des Rohrbündels und/oder in einer Umfangsrichtung des Rohrbündels variabel auf das Rohrbündel verteilt wird, so dass die Isttemperaturverteilung der Solltemperaturverteilung angenähert wird.

Zur Auswertung des gestreuten Lichts wird bevorzugt eine Messeinrichtung mit dem mindestens einem Lichtwellenleiter verbunden, die dazu eingerichtet und vorgesehen ist, mittels des besagten Lichtwellenleiters die Isttemperaturverteilung im Wärmeübertrager zu messen.

Die besagte Messeinrichtung ist hierzu bevorzugt dazu ausgebildet bzw. wird dazu verwendet, in den mindestens einen Lichtwellenleiter Licht bzw. optische Signale einzuleiten und in den Lichtleiter zurückgestreutes Licht in bekannter Weise auszuwerten. Hierbei wird ausgenutzt, dass die in dem Lichtwellenleiter eingesandten und zurückgestreuten optischen Signale stark temperaturabhängig und daher zur Temperaturmessung in der Umgebung des Lichtwellenleiters geeignet sind. Zur Auswertung solcher optischen Signale des Lichtleiters existieren mehrere Verfahrensweisen, die es erlauben, die Temperatur an einem beliebigen Punkt des Lichtleiters mit ausreichend hoher Präzision zu bestimmen.

In einer bevorzugten Ausführungsform des erfindungsgemäßen Verfahrens ist die Messeinrichtung dazu eingerichtet und vorgesehen, durch den mindestens einen Lichtwellenleiter zurückgestreutes Licht auszuwerten, das durch Raman-Streuung des in den Lichtleiter eingeleiteten Lichtes entsteht. Hierbei wird ausgenutzt, dass Lichtwellenleiter in der Regel aus dotiertem Quarzglas (amorphe FestKörperstruktur, bestehend hauptsächlich aus Siliziumdioxid) gefertigt sind. In derartigen amorphen Festkörperstrukturen werden über thermische Effekte Gitterschwingungen induziert. Solche Gitterschwingungen sind temperaturabhängig. Licht, welches auf die Moleküle bzw. Partikel im Lichtleiter trifft, tritt daher in Wechselwirkung mit den Elektronen der Moleküle. Diese Wechselwirkung wird auch als Ramanstreuung bezeichnet. Das zurückgestreute Licht lässt sich in drei spektrale Gruppen einteilen. Neben der Rayleigh-Streuung, welche der Wellenlänge des eingestrahlten Lichts entspricht, existieren die sogenannte Stokes- und die sogenannten Anti-Stokes-Komponenten. Im Gegensatz zu den zu höheren Wellenlängen verschobenen und nur gering temperaturabhängigen Stokes-Komponenten sind die zu kleineren Wellenlängen verschoben Anti-Stokes-Komponenten deutlich temperaturabhängig. Die Messeinrichtung ist daher vorzugsweise dazu ausgebildet, das Intensitätsverhältnis zwischen Stokes- und Anti-Stokes-Komponenten zu berechnen, wobei die Messeinrichtung vorzugsweise dazu ausgebildet ist, hierzu eine Fourier-Transformation dieser beiden rückgestreuten Komponenten zu berechnen und mit einer Fourier-Transformation eines Referenzsignals zu vergleichen. Hieraus erhält man die Intensitäten der beiden Komponenten über der Länge des Lichtwellenleiters. Somit kann über den Vergleich der beiden Intensitäten die Temperatur für jeden Punkt des Lichtwellenleiters ermittelt werden.

Gemäß einer weiteren Variante des erfindungsgemäßen Verfahrens ist vorgesehen, dass die Temperaturbestimmung durch Auswertung der Rayleigh-Streuung erfolgt.

Hierzu weist die Messeinrichtung bevorzugt ein kohärentes Frequenzbereichsreflektometer (auch als c-OFDR bezeichnet, für coherent Optical Frequency Domain Reflectometer) auf, bei dem Licht eines durchstimmbaren Lasers in ein Mach-Zehnder-Interferometer eingekoppelt wird, das das Licht auf zwei Strecken aufteilt, wobei der Lichtwellenleiter die eine Strecke bildet und die andere Strecke eine Referenzstrecke bekannte Länge ist. Das Rayleigh-Streulicht aus dem Lichtwellenleiter wird mit dem Lichtanteil aus der Referenzstrecke überlagert und detektiert. Beim Durchstimmen der Laserwellenlänge entsteht dabei am Detektor ein periodisches Signal, dessen Frequenz vom jeweiligen Streuort des Lichtwellenleiters abhängt. Die einzelnen Frequenzen dieses Signals, die über eine Fourier-Transformation erhältlich sind, entsprechen somit den Streuorten in dem Lichtwellenleiter; die Amplitude ihres Frequenzanteils gibt die Intensität der jeweiligen Reflexion an. Hierbei lassen sich Auflösungen ≤ 0,1 mm erzielen.

Die Rayleigh-Strahlung in einem Lichtwellenleiter, wie zum Beispiel einer Glasfaser, entsteht durch elastische Streuprozesse an lokalen Effekten/Störungen des Lichtwellenleiters. Wird eine solche Glasfaser mittels c-OFDR abgetastet, ergibt sich ein für die Glasfaser charakteristischer, fluktuierender Intensitätsverlauf der Rayleigh-Streuung entlang der Glasfaser, der bei einer Temperaturänderung (Änderung der räumlichen Ausdehnung der Faser) räumlich gestreckt bzw. gestaucht wird, wodurch die Temperatur entlang der Glasfaser berechnet werden kann. Die Messeinrichtung ist entsprechend bevorzugt konfiguriert, das Signal entlang der Glasfaser in benachbarte Segmente (z.B. ≥ 1 mm) zu zerlegen und das entsprechende Signal in den Frequenzraum zu transformieren. Für jedes Segment ergibt sich dabei ein fluktuierendes Reflexionsmuster in Abhängigkeit von der Frequenz. Änderung der Temperatur bzw. Dehnung der Glasfaser bedingen eine Frequenzverschiebung, die insbesondere proportional zur Temperaturänderung der Glasfaser in jeweiligem Segment ist. Die Messeinrichtung ist entsprechend bevorzugt dazu ausgebildet, an Hand der jeweiligen Frequenzverschiebung die z,lokale) Temperatur der Glasfaser bzw. des Lichtwellenleiters zu ermitteln.

In einer weiteren Ausführungsform des erfindungsgemäßen Verfahrens erfolgt die Temperaturmessung über die Auswertung von optischen Signalen, wie sie durch Brillouin-Streuung des Lichtwellenleiters entstehen. In diesem Fall basiert die Temperaturmessung auf der ortsaufgelösten Bestimmung der Referenzfrequenz zwischen der in den Lichtwellenleiter eingeleiteten, primären Lichtwelle und der durch die in Folge von Brillouin-Streuung im Lichtleiter induzierten und zurückgestreuten Welle, welche in ihrer Frequenz in Abhängigkeit von der Temperatur gegenüber der Primärwelle verringert ist. Die Messeinrichtung ist daher vorzugsweise dazu ausgebildet, eine pulsförmige Primärlichtwelle in dem Lichtleiter einzuleiten und das rückgestreute Licht zeitaufgelöst für verschiedene Frequenzdifferenzen zu detektieren und unter Kenntnis der Pulslaufzeit die Frequenzverschiebung auf Grund der Temperaturveränderung ortsaufgelöst zu bestimmen. Auch in dieser Ausgestaltung der Erfindung lässt sich also durch die Auswertung der rückgestreuten optischen Signale die Temperatur an jedem beliebigen Punkt des Lichtwellenleiters bestimmen.

In einer weiteren Ausführungsform der Erfindung ist vorgesehen, die Temperatur über die Auswertung von optischen Signalen, wie sie durch Streuung am Bragg-Gitter entstehen, zu messen. Bragg-Gitter sind in den Lichtwellenleiter eingeschriebene, optische Bandfilter, welche nahezu beliebig oft im Lichtwellenleiter platziert werden können. Die Mittenwellenzahl des Bandstopps ergibt sich dabei aus der Bragg-Bedingung. Die spektrale Breite des Bandstopps hängt neben der Gitterlänger und der Brechzahl von der Temperatur ab. Die Messeinrichtung ist dann entsprechend dazu ausgebildet, bei gegebener und über den Lichtwellenleiter verschiedener Gitterlänge und Brechzahl die Temperatur an der jeweiligen Stelle des Bragg-Gitters über die Breite des Bandstopps zu bestimmen.

Auf Grund der hohen Auflösung der erfindungsgemäßen Temperaturmessmethode kann die Isttemperaturverteilung bevorzugt als eine dreidimensionale Isttemperaturverteilung bzw. als ein dreidimensionales Isttemperaturprofil gemessen werden. Das heißt insbesondere, dass die Temperatur für eine Mehrzahl an dreidimensional im Raum verteilter Messorte genau angegeben werden kann. Hierzu wird der mindestens eine Lichtwellenleiter oder eine Mehrzahl an derartigen Lichtwellenleitern entlang der gewünschten Messorte verlegt, so dass sich der mindestens eine Lichtwellenleiter bzw. mehrere derartige Lichtwellenleiter von Messort zu Messort erstrecken. Die Messorte in dem Lichtwellenleiter liegen dabei sehr dicht beieinander, da die vorgenannten Auswertemethoden eine vergleichweise hohe räumliche Auflösung aufweisen.

Nach dem erfindungsgemäßen Verfahren ist vorgesehen, dass der Wärmeübertrager ein Rohrbündel mit einer Vielzahl an Rohren aufweist, die in einem drucktragenden Mantelraum des Wärmeübertragers angeordnet sind, wobei bevorzugt die besagte Isttemperaturverteilung mittels zumindest eines Lichtwellenleiters bestimmt wird, der im Innenraum eines Rohres des Wärmeübertragers angeordnet ist oder mittels eines Lichtwellenleiters, der alternativ oder ergänzend auf einer Außenseite eines Rohres des Wärmeübertragers im Mantelraum des Wärmeübertragers angeordnet ist. Hierbei ist es natürlich möglich, jedes der Rohre des Rohrbündels des Wärmeübertragers mit einem in dem jeweiligen Rohr und/oder auf dem jeweiligen Rohr verlaufenden Lichtwellenleiter auszustatten, die dann bevorzugt zusammengeführt werden und in die vorstehend beschriebene Messeinrichtung eingekoppelt werden.

Bevorzugt bilden die besagten Rohre des Rohrbündels des Wärmeübertragers eine Mehrzahl an separat mit dem besagten Medium beschickbare Sektionen des Rohrbündels aus, wobei die einzelnen Sektionen jeweils so mit einem Strom des Mediums schickt werden, das die Isttemperaturverteilung der Solltemperaturverteilung angenähert wird. Bei den besagten Sektionen handelt es sich bevorzugt um radiale Sektionen, d. h. die Rohre des Rohrbündels sind derart um das zugeordnete Kernrohr umwickelt, das zumindest eine das Kernrohr umlaufende erste Sektion des Rohrbündels und eine dazu separate, das Kernrohr umlaufende zweite Sektion des Rohrbündels gebildet wird, die die erste Sektion umgibt oder diese zumindest teilweise durchdringt, wobei die beiden Sektionen jeweils zumindest einen zugeordneten Einlass aufweisen, so dass die beiden Sektionen separat mit jenem Medium schickbar sind (sogenannte rohrseitige Regelung). Natürlich kann das Rohrbündel auf diese Weise in eine beliebige Mehrzahl an einzelnen, separat beschickbaren Sektionen aufgeteilt werden, die in radialer Richtung des Rohrbündels übereinanderliegen bzw. einander zumindest partiell durchdringen.

Mittels eines Regelmittels wird dann bevorzugt die Einspeisung des besagten Mediums über den Einlass der ersten Sektion separat von der Einspeisung des Mediums über den Einlass der zweiten Sektion geregelt. Hierbei umfasst das Regelmittel bevorzugt zumindest ein Ventil für den Einlass der ersten Sektion und ein Ventil für den Einlass der zweiten Sektion. Entsprechendes gilt bei einer beliebigen Mehrzahl von Sektionen des Rohrbündels. Weiterhin weisen die besagten Sektionen jeweils zumindest einen zugeordneten Auslass zum Auslassen des Mediums aus der jeweiligen Sektion des Rohrbündels auf.

Gemäß einer weiteren Variante des erfindungsgemäßen Verfahrens ist vorgesehen, dass bei einem Wärmeübertrager in Form eines gewickelten Wärmeübertragers ein Strom eines flüssigen Mediums so im Mantelraum auf das besagte Rohrbündel verteilt wird, dass die Isttemperaturverteilung der Solltemperaturverteilung angenähert wird (sogenannte mantelseitige Regelung).

Eine derartig variable Flüssigkeitsverteilung im Mantelraum wird bei dem erfindungsgemäßen Verfahren bevorzugt mit einem oberhalb des Rohrbündels angeordneten Flüssigkeitsverteiler zum Verteilen des besagten Stromes im Mantelraum durchgeführt. Hierbei ist bevorzugt ein Regelmittel vorgesehen, das dazu ausgebildet ist, die Verteilung des besagten Stromes der Flüssigkeit im Mantelraum zu regeln. Alternativ oder ergänzend kann das Regelmittel dazu eingerichtet und vorgesehen sein, die Verteilung eines zusätzlichen, im Mantelraum geführten weiteren Stromes der Flüssigkeit im Mantelraum zu regeln.

Hierbei wird bevorzugt der besagte Strom und/oder jene weitere Strom des flüssigen Mediums in einer radialen Richtung des Mantels bzw. des Rohrbündels zumindest auf eine erste und eine zweite Sektion des Rohrbündels und/oder in einer Umfangsrichtung des Mantels bzw. Rohrbündels variabel verteilt, so dass die gemessenen Isttemperaturverteilungen entsprechend einer vorgegebenen Solltemperaturverteilung angeglichen werden.

Hierbei kann zum Beispiel ein radial weiter außen gelegener Bereich bzw. Sektion des Rohrbündels innerhalb einer bestimmten Zeitspanne mehr Flüssigkeit erhalten als ein weiter innenliegender Bereich bzw. Sektion. In gleicher Weise kann entlang der Umfangsrichtung variabel Flüssigkeit auf das Rohrbündel aufgegeben werden.

Das erfindungsgemäße Verfahren wird vorzugsweise mit einer Einrichtung durchgeführt, die einen gewickelten Wärmeübertrager aufweist, sowie zumindest einen im Wärmeübertrager angeordneten Lichtwellenleiter zum Messen einer insbesondere dreidimensionalen Isttemperaturverteilung des Wärmeübertragers, und eine mit dem mindestens einem Lichtwellenleiter verbundene Messeinrichtung, die dazu eingerichtet und vorgesehen ist, Licht in den mindestens einen Lichtwellenleiter einzukoppeln und in dem mindestens einen Lichtwellenleiter gestreutes Licht zur Ermittlung der Isttemperaturverteilung auszuwerten, wobei die Einrichtung des Weiteren ein Regelmittel zum Regeln zumindest eines im Wärmeübertrager geführten Stromes aufweist, derart, dass die Isttemperaturverteilung einer vordefinierten SollTemperaturverteilung angenähert wird.

Weiterhin weist der gewickelte Wärmeübertrager ein gewickeltes Rohrbündel mit einer Vielzahl an Rohren auf, die in einem Mantelraum des Wärmeübertragers in mehreren Lagen um ein Kernrohr gewickelt sind, wobei der mindestens eine Lichtwellenleiter im Innenraum eines Rohres des gewickelten Rohrbündels des Wärmeübertragers oder auf einer Außenseite des Rohres des gewickelten Rohrbündels des Wärmeübertragers im Mantelraum angeordnet ist. Hierbei kann wiederum jedes Rohr des Wärmeübertragers mit einem im Rohr und/oder einem außen auf dem Rohr verlaufenden Lichtwellenleiter ausgestattet sein, wobei jene Lichtwellenleiter dann zusammengeführt werden und mit der Messeinrichtung gekoppelt werden.

Die besagten Rohre des Wärmeübertragers bilden bevorzugt eine Mehrzahl an separat mit jenem Medium beschickbaren Sektionen des Rohrbündels aus, wobei diese einzelnen Sektionen jeweils so mit dem besagten Strom des Mediums beschickt werden, dass die gemessene Isttemperaturverteilung der gewünschten Solltemperaturverteilung angenähert wird (sogenannte rohrseitige Regelung).

Bei dem gewickelten Wärmeübertrager sind dabei die Rohre des Rohrbündels bevorzugt derart um das Kernrohr des gewickelten Wärmeübertragers gewickelt, dass zumindest eine das Kernrohr umlaufende erste Sektion des Rohrbündels und eine dazu separate, das Kernrohr umlaufende zweite Sektion des Rohrbündels gebildet wird, die die erste Sektion umgibt, oder diese zumindest teilweise durchdringt, wobei die beiden Sektionen jeweils zumindest einen zugeordneten Einlass aufweisen, so dass die beiden Sektionen separat mit jenem Medium beschickbar sind. Hierbei kann natürlich wiederum eine beliebige Mehrzahl derartiger Sektionen vorgesehen sein.

Das Regelmittel ist dann diesbezüglich bevorzugt dazu ausgebildet, die Einspeisung des Mediums über den Einlass der ersten Sektion separat von der Einspeisung des Mediums über den Einlass der zweiten Sektion zu regeln. Entsprechendes gilt bei einer beliebigen Mehrzahl an Sektionen. Hierzu umfasst das Regelmittel zumindest ein Ventil für den Einlass der ersten Sektion und ein Ventil für den Einlass der zweiten Sektion. Entsprechendes gilt bei einer Mehrzahl an Sektionen. Des Weiteren weisen die einzelnen Sektionen jeweils zumindest einen zugeordneten Auslass zum Auslassen des ersten Mediums aus der jeweiligen Sektion des Rohrbündels auf.

Alternativ oder ergänzend zu einer rohrseitigen Regelung kann bei einem Wärmeübertrager in Form eines gewickelten Wärmeübertragers auch eine mantelseitige Regelung vorgesehen werden.

Hierbei ist die Einrichtung bevorzugt dazu ausgebildet, einen Strom eines flüssigen Mediums so im Mantelraum variabel auf das Rohrbündel zu verteilen, dass die Isttemperaturverteilung der Solltemperaturverteilung angenähert wird. Eine solche Regelung kann wie bereits eingangs dargelegt über einen Flüssigkeitsverteiler oder eine zusätzliche Einleitung von Strömen in den Mantelraum geregelt werden. Eine Variante der Einrichtung sieht diesbezüglich einen Flüssigkeitsverteiler zum Verteilen des besagten Stromes im Mantelraum vor, der insbesondere oberhalb des Rohrbündels im Mantelraum angeordnet ist. Dabei ist das Regelmittel insbesondere dazu ausgebildet, die Verteilung des besagten Stromes im Mantelraum zu regeln und/oder die Verteilung eines zusätzlichen in dem Mantelraum geführten, weiteren Stromes des flüssigen Mediums im Mantelraum zu regeln. Hierbei kann der Flüssigkeitsverteiler einen Hauptverteiler oberhalb des Rohrbündels zur Aufnahme des zur verteilenden flüssigen Mediums des besagten Stromes aufweisen, wobei der Hauptverteiler bevorzugt Durchgangsöffnungen aufweist, durch die hindurch das Medium auf das Rohrbündel aufgebbar ist.

In einer Variante der Einrichtung ist zumindest eine zusätzliche Leitung mit zumindest einem Auslass vorgesehen, über den der weitere Strom der Flüssigkeit regelbar auf das Rohrbündel aufgebbar ist, wobei das Regelmittel insbesondere zum Regeln der Verteilung des weiteren Stromes der Flüssigkeit zumindest ein Ventil für die besagte Leitung aufweist. In diesem Zusammenhang kann der Hauptverteiler zumindest einen Durchgangsbereich aufweisen, durch den Rohre des Rohrbündels hindurchgeführt sind, wobei jener Durchgangsbereich insbesondere durch zwei Verteilerarme des Hauptverteilers begrenzt sein kann, über die die Flüssigkeit bzw. das Medium auf das Rohrbündel aufgebbar ist.

Hierbei kann die besagte mindestens eine Leitung durch die mindestens einen Durchgangsbereich hindurchgeführt sein. Somit kann eine Verteilung über den Hauptverteiler als auch über die zusätzlichen Leitungen vorgenommen werden. Bevorzugt sind dabei eine Mehrzahl an derartigen Leitungen mit je zumindest einem Auslass vorgesehen, über die der weitere Strom der Flüssigkeit regelbar auf das Rohrbündel aufgebbar ist, wobei die Auslässe so über den Querschnitt des Mantelraums verteilt sind, dass der weitere Strom der Flüssigkeit in einer radialen Richtung des Mantels zumindest auf eine erste und eine zweite Sektion des Rohrbündels (bzw. auf eine beliebige Mehrzahl an Sektionen) und/oder einer Umfangsrichtung des Mantels variabel verteilbar ist, um insbesondere die wiederholt gemessene Isttemperaturverteilung einer vordefinierten Solltemperaturverteilung anzupassen.

In einer Variante der Einrichtung ist vorgesehen, dass der Hauptverteiler des Flüssigkeitsverteilers eine Mehrzahl an Verteilerarmen aufweist, die insbesondere jeweils in radialer Richtung des Mantels bzw. des Kernrohres oder auch Rohrbündels erstreckt sind.

Dabei ist weiterhin bevorzugt vorgesehen, dass die Verteilerarme zum variablen Verteilen des Stromes der Flüssigkeit in radialer Richtung zumindest in zwei separate Segmente unterteilt sind, die jeweils zumindest eine Durchgangsöffnung aufweisen, durch die hindurch Flüssigkeit auf das Rohrbündel aufgebbar ist, wobei das Regelmittel bevorzugt dazu eingerichtet und vorgesehen ist, eine Zufuhr von Flüssigketi in die beiden Segmente separat zu regeln, so dass die Flüssigkeit in radialer Richtung des Mantels auf zumindest eine erste und eine zweite Sektion des Rohrbündels entsprechend variabel verteilbar ist. Entsprechendes gilt bei einer beliebigen Mehrzahl an Sektionen.

Weiterhin kann vorgesehen sein, dass zumindest ein Verteilerarm dazu eingerichtet und vorgesehen ist, entlang der radialen Richtung des Mantels eine erste Sektion mit Flüssigkeit zu beaufschlagen, und dass zumindest ein anderer Verteilerarm dazu eingerichtet vorgesehen ist, entlang der radialen Richtung des Mantels eine davon verschiedene zweite Sektion des Rohrbündels mit Flüssigkeit zu beaufschlagen, wobei insbesondere die beiden Verteilerarme zum Verteilen der Flüssigkeit auf die beiden Sektionen je zumindest eine Durchgangsöffnung aufweisen, durch die hindurch Flüssigkeit auf das Rohrbündel aufgebbar ist, wobei jene Durchgangsöffnungen entlang der radialen Richtung unterschiedlich positioniert sind, und wobei insbesondere zum Speisen der einzelnen Verteilerarme mit der Flüssigkeit eine Mehrzahl an Fallrohren vorgesehen ist, wobei ein Fallrohr je zumindest einen, insbesondere zwei Verteilerarme mit Flüssigkeit beaufschlagt, und wobei insbesondere die Fallrohre im Kernrohr angeordnet sind oder durch eine Unterteilung des Kernrohres in Sektionen gebildet sind.

Andere Vorrichtungen, zur radial variablen bzw. variablen Verteilung in Umfangsrichtung des Rohrbündels können auch vorgesehen werden.

Weitere Einzelheiten und Vorteile der Erfindung sollen durch die nachfolgende Figurenbeschreibungen von Ausführungsbeispielen an Hand der Figuren erläutert werden.

Es zeigen:
- Fig. 1: eine schematische Schnittansicht eines gewickelten Wärmeübertragers mit rohr- und/oder mantelseitiger Regelung in Abhängigkeit einer gemessenen Isttemperaturverteilung des Wärmeübertragers;
- Fig. 2: eine Draufsicht auf einen Flüssigkeitsverteiler zur mantelseitigen Regelung in Abhängigkeit einer gemessenen Isttemperaturverteilung; und

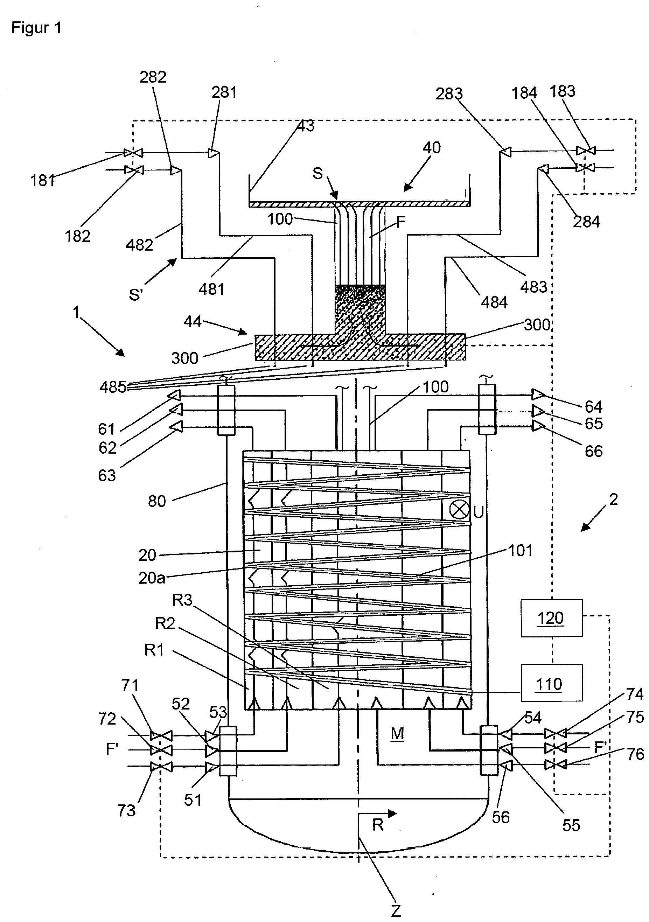

Fig. 1 zeigt eine schematische Schnittansicht einer Einrichtung 1 mit einem Wärmeübertrager 2, der einen insbesondere hohlzylinderischen, drucktragenden Mantel 80 aufweist, dessen Längs- bzw. Zylinderachse Z sich - bezogen auf einen bestimmungsgemäß angeordneten Zustand des Wärmeübertragers 1 - entlang der Vertikalen Z erstreckt. Der Mantel 80 begrenzt dabei einen Mantelraum M, in dem ein gewickeltes Rohrbündel 20 angeordnet ist. Dieses weist mehrere Rohre 20a auf, die in mehreren Lagen um ein Kernrohr 100 gewickelt sind, dessen Längsachse mit der Längsachse des Mantels 80 zusammenfällt. Das Rohrbündel 20 ist also koaxial zum Mantels 80 angeordnet.

In dem durch das Rohrbündel 20 gebildeten Rohrraum wird zumindest ein erstes Medium F' eingespeist, das entlang der Vertikalen Z aufwärts strömt. Der Mantelraum M dient zur Aufnahme eines zweiten Mediums in Form einer Flüssigkeit F, die auf das mindestens eine Rohrbündel 20 aufgegeben wird und im Mantelraum M entlang der Vertikalen Z abwärts strömt. Aufgrund der Ausbildung des Rohrbündels 20 als gewickeltes Rohrbündel 20 wird das erste Medium F' somit im Kreuzgegenstrom zur Flüssigkeit F geführt.

Zum dreidimensionalen Messen einer Isttemperaturverteilung im Mantelraum M bzw. im Rohrbündel 20 ist zumindest ein Lichtwellenleiter 101 vorgesehen, der sich zum Beispiel in einem der Rohre 20a helikal - dem Verlauf des Rohres 20a entsprechend - erstreckt oder außerhalb eines solchen Rohres 20a angeordnet ist, um die Temperatur im Wärmeübertrager 2 dreidimensional zu vermessen. Es können natürlich eine Vielzahl an derartigen Lichtwellenleitern 101 in den einzelnen Rohren 20a oder auf den einzelnen Rohren 20a oder in sonstiger Weise im Mantelraum M angeordnet sein, um spezifische Bereiche des Wärmeübertragers 2 vermessen zu können. Der mindestens eine Lichtwellenleiter 101 wird vorzugsweise aus dem Mantelraum M herausgeführt und mit einer Messeinrichtung 110 gekoppelt, die dazu ausgebildet ist, in dem Lichtwellenleiter 101 zurückgestreutes Licht zur Bestimmung der Temperatur im Wärmeübertrager 2 auszuwerten. Da auf Grund dieser Messmethode eine Vielzahl an Messpunkten entlang des Lichtwellenleiters 101 erhalten werden, kann bei einer dreidimensionalen Anordnung des mindestens einen Lichtwellenleiters 101 eine dreidimensionale Isttemperaturverteilung in Echtzeit gemessen werden. Um einen optimalen Betrieb des Wärmeübertragers 2 gewährleisten zu können, wird eine entsprechende Solltemperaturverteilung des Rohrbündels 20 festgelegt, die einem solchen optimierten Betrieb entspricht. So kann zum Beispiel durch eine laufende Messung der Isttemperaturverteilung (auch als Isttemperaturprofil bezeichnet) des Rohrbündels 20 eine Ungleichverteilung des zweiten Mediums bzw. der flüssigen Phase F auf das Rohrbündel 20 detektiert werden, da diese eine entsprechende Isttemperaturverteilung des Rohrbündels 20 zur Folge hat. Um derartige Fehlverteilungen korrigieren zu können, ist die besagte Messeinrichtung 110 mit einem Regelmittel 120 gekoppelt, dass dazu ausgebildet ist, rohrseitig oder mantelseitig geführte Medien F, F' bzw. Ströme S, S' so einzuregeln, dass die jeweils gemessene Isttemperaturverteilung der gewünschten Solltemperaturverteilung angenähert wird.

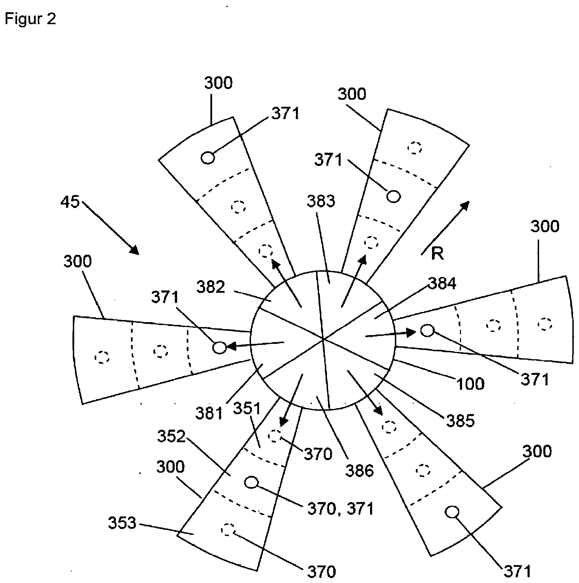

Zum Verteilen der Flüssigkeit F im Mantelraum M wird beispielsweise ein in den Mantel 80 eingeleiteter Strom S der Flüssigkeit F in einem Vorverteiler 43 gesammelt, beruhigt und entgast. Der Vorverteiler 43 weist zum Aufnehmen der Flüssigkeit F dabei eine umlaufende Wandung auf, die von einem quer zur Längsachse Z des Mantels 20 verlaufenden Boden abgeht. Der Boden des Vorteilers 43 ist über ein im Kernrohr 100 verlaufendes Fallrohr 380 mit einem Hauptverteiler 44 des Flüssigkeitsverteilers 40 verbunden, um diesen mit dem Strom S der Flüssigkeit F zu speisen, wobei jener Hauptverteiler 44 zum Verteilen des Stromes S der Flüssigkeit F über den gesamten Querschnitt des Mantelraums M quer zur Vertikalen Z eine Mehrzahl an Verteilerarmen 300 aufweist (vgl. Fig. 2), die jeweils kreissektorförmig in einer radialen Richtung R des Mantels 80 vom Kernrohr 100 abgehen, so dass zwischen den Verteilerarmen 300 Durchgangsbereiche 45 gebildet werden (vgl. Fig. 2), durch die hindurch die Rohre 20a des Rohrbündels 20 am Hauptverteiler 44 vorbeigeführt werden können.

Die Verteilerarme 300 weisen jeweils einen Boden mit einer Mehrzahl an Durchgangsöffnungen auf, sogenannte Lochböden, durch die hindurch in die Verteilerarme 300 eingeleitete Flüssigkeit F auf das entlang der Vertikalen Z darunter angeordnete Rohrbündel 20 regnen kann.

Um nun auf die Verteilung der Flüssigkeit F im Mantelraum M Einfluss nehmen zu können und gegebenenfalls zum Beispiel einer Ungleichverteilung entgegenwirken zu können, wird nun mantelseitig die Verteilung und Zuführung eines Teils der Flüssigkeit F in Form zumindest eines weiteren Stromes S' parallel zum (Haupt)Strom S geführt.

Hierzu sind zusätzliche Leitungen 481 bis 484 zum Leiten des weiteren Stromes S' (bzw. der weiteren Ströme) vorgesehen, die über entsprechende Einlässe/Stutzen 281 bis 284 in den Mantelraum M geführt sind, und jeweils zumindest einen Auslass 485 aufweisen, über den die Flüssigkeit F zusätzlich regelbar auf das mindestens eine Rohrbündel 20 aufgegeben werden kann. Hierzu verfügen die besagten Leitungen 481 bis 484 jeweils über ein zugeordnetes Ventil 181 bis 184, das mittels des Regelmittels 120 regelbar ist, so dass das Regelmittel 120 entsprechend der momentanen Isttemperaturverteilung die einzelnen Ventile 181 bis 184 so stellen kann, dass der zusätzliche Strom S' der Flüssigkeit F derart auf das Rohrbündel 20 verteilt wird, dass sich die laufend gemessene Isttemperaturverteilung an die vorgegebene Solltemperaturverteilung annähert. Um die Flüssigkeit F dabei kontrolliert über die Leitungen 481 bis 484 auf das Rohrbündel 20 aufgeben zu können, sind die Leitungen 481 bis 484 durch die besagten Durchgangsbereiche 45 des Hauptverteilers 44 hindurchgeführt, wobei die Auslässe 485 der Leitungen 481 bis 484 oberhalb des Rohrbündels 20 angeordnet sind, und zwar insbesondere so, dass das Rohrbündel 20 in der radialen Richtung R des Mantels 80 bzw. des Rohrbündels 20 sektionsweise separat regelbar mit der Flüssigkeit F beaufschlagbar ist. Die einzelnen Sektionen können jeweils radial weiter innen gelegene Sektionen umgreifen, wobei sich benachbarte Sektionen auch gegenseitig durchdringen können.

Neben der mantelseitigen Regelung eines zusätzlichen Stromes S' besteht auch die Möglichkeit, den Hauptstrom S über den Flüssigkeitsverteiler 40 selbst zu regeln. Dies ist in Fig. 2 gezeigt. Hierbei können die kreissektorförmig ausgebildeten Verteilerarme 300 des Hauptverteilers 44 nach Art der Fig. 1, die durch die besagten Durchgangsbereiche 45 voneinander separiert sind, zum variablen Verteilen des Stromes S der Flüssigkeit F in der radialen Richtung R in eine Mehrzahl an Segmente 351 bis 353 unterteilt sein, die jeweils zumindest eine Durchgangsöffnung 370 aufweisen, durch die hindurch die Flüssigkeit F auf das daruntergelegene Rohrbündel 20 abregnen kann. Wird nun eine Zufuhr von Flüssigkeit F in die besagten Segmente 351 bis 353 für jedes der Segmente 351 bis 353 separat geregelt, zum Beispiel indem jedes Segment 351 bis 353 über ein mittels eines Ventils regelbares Fallrohr beschickt wird (zum Beispiel aus einem Vorverteiler 43), so kann der Strom S der Flüssigkeit F in radialer Richtung R des Mantels 80 bzw. des Rohrbündels 20 auf eine der Segmentanzahl entsprechende Anzahl an Sektionen des Rohrbündels 20 (siehe oben) variabel verteilt werden. Hierzu ist das besagte Regelmittel 120 entsprechend mit den besagten Ventilen am Fallrohr verbunden, so dass diese entsprechend des momentanen, insbesondere in Echtzeit gemessenen Isttemperaturverteilung derart geregelt werden können, dass die Isttemperaturverteilung der Solltemperaturverteilung angenähert wird.

Alternativ hierzu können die Verteilerarme 300 dazu ausgebildet sein, unterschiedliche Sektionen des Rohrbündels 20 mit Flüssigkeit F zu beaufschlagen, zum Beispiel durch eine entsprechende Verteilung der Durchgangslöcher 371 der Verteilerarme 300 entlang der radialen Richtung R gemäß Fig. 2. Um dies zu illustrieren, weisen die Verteilerarme 300 gemäß Fig. 2 je eine Durchgangsöffnung 371 auf, die gegenüber den entsprechenden Durchgangsöffnungen 371 der benachbarten Verteilerarme 300 in der radialen Richtung R verschoben ist. Andere derartige Verteilungen, insbesondere mit mehreren Durchgangslöchern pro Verteilerarm 300 sind ebenfalls denkbar.

Um nun die einzelnen Verteilerarme 300 mit Flüssigkeit F des (Haupt)Stromes S beschicken zu können, ist vorzugsweise vorgesehen, dass das Kernrohr 100 in Sektionen 381 bis 386 unterteilt ist, so dass eine entsprechende Anzahl an Fallrohren gebildet wird, die jeweils vorzugsweise regelbar ausgestaltet sind (zum Beispiel mittels Ventilen) und jeweils zumindest einem zugeordneten Verteilerarm 300 mit der Flüssigkeit F beschicken (vgl. Fig. 2). Es ist auch denkbar, dass eine Sektion 381 bis 386 des Kernrohres 100 mehr als einen Verteilerarm 300, zum Beispiel zwei Verteilerarme 300, mit der Flüssigkeit F beaufschlägt. Die besagten Fallrohre 381 bis 386 wiederum können zum Beispiel aus einem Vorverteiler 43 gemäß Fig. 1 gespeist werden. Die besagten Ventile sind wiederum mit dem Regelmittel 120 verbunden, so dass in Abhängigkeit der jeweiligen Isttemperaturverteilung die einzelnen Ventile so gestellt werden können, dass die laufend gemessene Isttemperaturverteilung sich an die vorgegebenen Solltemperaturverteilung des Rohrbündels 20 annähert.

Alternativ oder ergänzend zur vorgenannten mantelseitigen Regelung von Medienströmen S bzw. S' besteht gemäß Fig. 1 weiterhin die Möglichkeit zur entsprechenden sektionsweisen Aufteilung bzw. Regelung der Rohrströme. Hierzu sind bevorzugt die Rohre 20a des koaxial zum Mantel 80 des Wärmeübertragers 2 angeordneten Rohrbündels 20 derart um das Kernrohr 100 gewickelt, dass mehrere Sektionen R1, R2, R3 des Rohrbündels 20 gebildet werden, die separat zueinander ausgebildet sind und jeweils das Kernrohr 100 umlaufen, wobei die Sektionen R1, R2, R3 einander umgreifen, aber auch einander durchdringen können. Somit sind radial gestaffelte Sektionen R1, R2, R3 des Rohrbündels 20 vorhanden, die separat regelbar mit der Flüssigkeit F wie oben beschrieben beregnet werden können. Darüber hinaus können die einzelnen Sektionen R1, R2, R3 nicht nur separat über zugeordnete Einlässe 51 bis 56 an einem unteren Ende des Mantels 80 mit dem ersten Medium beschickt werden (vorliegend weist jede Sektion R1, R2, R3 ohne Beschränkung der Allgemeinheit zwei Einlässe und Auslässe auf; es kann jedoch auch lediglich ein Ein- bzw. Auslass pro Sektion vorgesehen sein), sondern die Beaufschlagung der Rohrseite kann auch über den Einlässen 51 bis 56 zugeordnete Ventile 71 bis 76, die entsprechend mit dem Regelmittel 120 verbunden sind, geregelt werden. Hierbei werden die einzelnen Ventile 71 bis 76 durch das Regelmittel 120 so gestellt, dass die jeweilige Isttemperaturverteilung des Rohrbündels 20 einer gewünschten Solltemperaturverteilung angeglichen wird. Das in den einzelnen radialen Sektionen R1, R2, R3 eingeleitete Medium F' kann schließlich an einem oberen Ende des Mantels 80 über entsprechende Auslässe 61 bis 66 der Sektionen R1, R2, R3 aus dem Rohrbündel 20 abgezogen werden.

## Patentansprüche

1. Verfahren zum Regeln einer Temperaturverteilung in einem Wärmeübertrager, bei dem mittels zumindest eines in dem Wärmeübertrager (2;) angeordneten Lichtwellenleiters (101), insbesondere in Form einer Glasfaser, eine Isttemperaturverteilung im Wärmeübertrager (2) gemessen wird, wobei Licht in den mindestens einen Lichtwellenleiter (101) eingekoppelt wird und im Lichtwellenleiter (101) gestreutes Licht zur Ermittlung der Isttemperaturverteilung ausgewertet wird, und wobei der Wärmeübertrager (2) ein Rohrbündel (20) mit einer Vielzahl an Rohren (20a) aufweist, die in einem Mantelraum (M) des Wärmeübertragers (2) angeordnet sind, und wobei die Isttemperaturverteilung mittels des zumindest eines Lichtwellenleiters (101) gemessen wird, der im Innenraum eines Rohres (20a) des Rohrbündels (20) und/oder auf einer Außenseite eines Rohres (20a) des Rohrbündels (20) im Mantelraum (M) angeordnet ist, und wobei der Wärmeübertrager (2) als ein gewickelter Wärmeübertrager ausgebildet ist,
**dadurch gekennzeichnet,**
**dass** zumindest ein im Wärmeübertrager (2) geführter Strom (S, S') eines fluides Medium (F, F') so geregelt wird, dass die Isttemperaturverteilung einer Solltemperaturverteilung angenähert wird, und wobei
- die Rohre (20a) eine Mehrzahl an separat mit jenem Medium beschickbare Sektionen (R1, R2, R3) des Rohrbündels bilden (20), wobei die einzelnen Sektionen (R1, R2, R3) jeweils so mit jenem Medium (F') beschickt werden, dass die Isttemperaturverteilung der Solltemperaturverteilung angenähert wird,
oder
- ein Strom (S, S') eines flüssigen Mediums (F) so im Mantelraum (M) auf das Rohrbündel (20) verteilt wird, dass die Isttemperaturverteilung der Solltemperaturverteilung angenähert wird, wobei das flüssige Medium (F) in radialer Richtung (R) des Rohrbündels (20) und/oder in einer Umfangsrichtung (U) des Rohrbündels (20) variabel auf das Rohrbündel (20) verteilt wird, so dass die Isttemperaturverteilung der Solltemperaturverteilung angenähert wird.

2. Verfahren nach Anspruch 1, **dadurch gekennzeichnet, dass** als Isttemperaturverteilung eine dreidimensionale Isttemperaturverteilung gemessen wird.

## Claims

1. Method for controlling a temperature distribution in a heat exchanger, with which an actual temperature distribution in the heat exchanger (2) is measured by means of at least one optical waveguide (101), especially in the form of a glass fiber, arranged in the heat exchanger (2), wherein light is coupled into the at least one optical waveguide (101) and light dispersed in the optical waveguide (101) is analyzed to determine the actual temperature distribution, and wherein the heat exchanger (2) has a tube bundle (20) having a plurality of tubes (20a) arranged in a shell space (M) of the heat exchanger (2), and wherein the actual temperature distribution is measured by means of the at least one optical waveguide (101), which is arranged in the interior of a tube (20a) of the tube bundle (20) and/or on an exterior of a tube (20a) of the tube bundle (20) in the shell space (M), and wherein the heat exchanger (2) is configured as a coil-wound heat exchanger,
**characterized in that**
at least one stream (S, S') of a fluid medium (F, F') conducted in the heat exchanger (2) is controlled such that the actual temperature distribution is approximated to a target temperature distribution, and wherein
- the tubes (20a) form a plurality of sections (R1, R2, R3) of the tube bundle (20) which can be separately filled with said medium, wherein the individual sections (R1, R2, R3) are each filled with said medium (F') in such a way that the actual temperature distribution is approximated to the target temperature distribution,
or
- a stream (S, S') of a fluid medium (F) is distributed in the shell space (M) into the tube bundle (20) in such a way that the actual temperature distribution is approximated to the target temperature distribution, wherein the fluid medium (F) is variably distributed into the tube bundle (20) in the radial direction (R) of the tube bundle (20) and/or in a circumferential direction (U) of the tube bundle (20) so that the actual temperature distribution is approximated to the target temperature distribution.

2. Method according to claim 1, **characterized in that** a three-dimensional actual temperature distribution is measured as the actual temperature distribution.

## Revendications

1. Procédé pour régler une distribution de température dans un échangeur de chaleur, dans lequel une distribution de température réelle dans l'échangeur de chaleur (2) est mesurée au moyen d'au moins une fibre optique (101) disposée dans l'échangeur de chaleur (2), en particulier sous la forme d'une fibre de verre, la lumière étant couplée dans l'au moins une fibre optique (101) et la lumière diffusée dans la fibre optique (101) étant évaluée pour déterminer la distribution de température réelle et l'échangeur de chaleur (2) présentant un faisceau de tubes (20) comprenant une pluralité de tubes (20a), qui sont disposés dans un espace d'enveloppe (M) de l'échangeur de chaleur (2) et la distribution de température réelle étant mesurée au moyen de l'au moins une fibre optique (101) disposée à l'intérieur d'un tube (20a) du faisceau de tubes (20) et/ou sur un côté extérieur d'un tube (20a) du faisceau de tubes (20) dans l'espace d'enveloppe (M) et l'échangeur de chaleur (2) étant conçu comme un échangeur de chaleur spiralé,
**caractérisé en ce**
**qu'**au moins un flux (S, S') d'un milieu fluide (F, F') guidé dans l'échangeur de chaleur (2) est réglé de manière à ce que la distribution de température réelle s'approche d'une distribution de température de consigne et
- les tubes (20a) formant une pluralité de sections (R1, R2, R3) du faisceau de tubes (20) qui peuvent être chargées séparément avec ce milieu, les sections individuelles (R1, R2, R3) étant chacune chargées avec ce milieu (F') de manière à ce que la distribution de température réelle s'approche de la distribution de température de consigne,
ou
- un flux (S, S') d'un milieu fluide (F) étant distribué dans l'espace d'enveloppe (M) sur le faisceau de tubes (20) de manière à ce que la distribution de température réelle s'approche de la distribution de température de consigne, le milieu fluide (F) étant distribué de manière variable sur le faisceau de tubes (20) dans une direction radiale (R) du faisceau de tubes (20) et/ou dans une direction circonférentielle (U) du faisceau de tubes (20), de sorte que la distribution de température réelle s'approche de la distribution de température de consigne.

2. Procédé selon la revendication 1, **caractérisé en ce qu'**une distribution de température réelle tridimensionnelle est mesurée en tant que distribution de température réelle.
